# EUROPÄISCHE PATENTANMELDUNG

(11) **EP 2 987 778 A1**
(43) Veröffentlichungstag der Anmeldung: **24.02.2016**
(21) Anmeldenummer: 15002122.8
(22) Anmeldetag: 16.07.2015
(51) Int. Cl.: C04B 30/00, F16L 59/02, F16L 59/06

(54) **ISOLIERUNG FÜR MIT HEISSGAS IN BERÜHRUNG KOMMENDE TEILE EINER SCHMALFLÄCHENBESCHICHTUNGSVORRICHTUNG, INSBESONDERE FÜR SCHLAUCH- ODER ROHRFÖRMIGE FÜHRUNGEN FÜR HEISSGAS**

(30) Priorität: 31.07.2014 DE 202014006236 U
(71) Anmelder: Schulte-Göbel, Christof, 57392 Schmallenberg (DE)
(72) Erfinder: Schulte-Göbel, Christof, 57392 Schmallenberg (DE)
(74) Vertreter: Wurm, Maria Bernadette

(57) **Zusammenfassung**

Die Erfindung betrifft eine Isolierung für mit Heißgas in Berührung kommende Teile einer Schmalflächenbeschichtungsvorrichtung, insbesondere für schlauch- oder rohrförmige Führungen für Heißgas, bei der die Isolierung hochporöse oder mikroporöse Materialien, insbesondere Aerogel, vorzugsweise Aerogel auf Silikatbasis aufweist. Weiterhin wird eine entsprechende schlauch- oder rohrförmige Führung für Heißgas an einer Schmalflächenbeschichtungsvorrichtung vorgeschlagen.

## Beschreibung

Die vorliegende Erfindung betrifft eine Isolierung für mit Heißgas in Berührung kommende Teile einer Schmalflächenbeschichtungsvorrichtung, insbesondere für schlauch- oder rohrförmige Führungen für Heißgas, gemäß Oberbegriff des Anspruchs 1 sowie eine schlauch- oder rohrförmige Führung für Heißgas an einer Schmalflächenbeschichtungsvorrichtung, aufweisend ein schlauch- oder rohrförmiges Führungselement für ein Heißgas, insbesondere Heißluft, sowie ein das Führungselement zumindest bereichsweise umgebendes Isoliermaterial gemäß Oberbegriff des Anspruchs 13.

Vorrichtungen zum Aufbringen eines Kantenstreifens auf eine Schmalfläche eines Werkstücks, insbesondere eines Holzwerkstücks, sind in unterschiedlichen Ausführungsformen bekannt. Diese sogenannten Kantenanleimvorrichtungen werden bei der Holzbearbeitung eingesetzt, um Kantenstreifen (auch Umleimer genannt) auf eine Schmalfläche eines Werkstücks aufzubringen. Häufig kommen zu diesem Zweck maschinell angetriebene Spezialmaschinen zum Einsatz, die ausschließlich dazu geeignet sind, Kantenstreifen auf Werkstückschmalflächen aufzubringen. Diese Spezialmaschinen sind relativ teuer, liefern jedoch hinsichtlich der Passgenauigkeit des Kantenstreifens auf der Werkstückschmalflächen gute Ergebnisse.

Dabei kommen bisher in der Regel Kantenstreifen zum Einsatz, die einseitig mit einem aktivierbaren Schmelzkleber versehen sind oder noch keinen Kleber aufgetragen haben. Der Kantenstreifen wird entsprechend der Schmalflächenlänge des zu bearbeitenden Werkstücks passgenau mit Überstand geschnitten, auf die Werkstückkante aufgesetzt, nach Auftragen eines unter Hitze zähflüssigen Klebers oder Aktivierung eines vorab aufgetragenen Schmelzklebers auf der Schmalfläche fixiert und gegebenenfalls manuell oder maschinell nachbearbeitet.

In jüngerer Vergangenheit sind weitere Materialien für Kantenstreifen entwickelt worden, die als sog. kleberlose Kantenstreifen bekannt sind, Diese bestehen aus zwei bevorzugt koextrudierten Schichten von unterschiedlichen Kunststoffmaterialien, von denen eine durch Einfluss von Laserlicht derart aufgeschmolzen wird, dass sie wie bei den bekannten Schmelzkleberschichten auf Schmalflächen aufgebracht werden kann und mit diesen Schmalflächen verklebt. Die andere der beiden Schichten wird durch das Laserlicht nicht verändert und bildet die sichtbare Außenseite des Kantenstreifens. Hierbei sind diese beiden koextrudierten Schichten optisch gleich aussehend ausgebildet und weisen insbesondere auch die gleiche Farbe auf, so dass die ohnehin nur dünne aufgeschmolzene Schicht sich nach dem Aufbringen des Kantenstreifens optisch nicht von dem Rest des Kantenstreifens unterscheidet. In der Branche wird daher entweder von der sog. Nullfuge oder unter Bezugnahme auf die bisher übliche Art der thermischen Aktivierung von der Laserkante gesprochen.

Aus der DE 10 2011 015 898 A1 ist es bekannt geworden, diese kleberlosen Kantenstreifen statt wie ursprünglich gedacht mittels Laser statt dessen auch mit unter Überdruck auf den Kantenstreifen aufgebrachtes Heißgas, insbesondere mit Heißluft so zu aktivieren, dass die Kantenstreifen verklebt werden können. Dies ermöglicht einen gegenüber der Laseraktivierung oder auch der alternativen Plasmaaktivierung einen wesentlich geringeren apparativen Aufwand bei mindestens gleich guter Verklebung. Praktischerweise wird als Heißgas erhitzte Luft z.B. in Form von erhitzter Druckluft verwendet, da diese im Werkstattbereich nahezu überall verfügbar ist. Selbstverständlich ist auch die Ansaugung von Umgebungsluft zur Erzeugung von Heißluft denkbar. Wenn im Weiteren allgemein von Heißgas gesprochen wird, so kann damit insbesondere Heißluft bzw. erhitzte Druckluft gemeint sein. Selbstverständlich können auch andere Gase oder Gasgemische als Heißgase verwendet werden. Die Begriffe Heißgas und Heißluft werden der Einfachheit halber als Synonyme verwendet.

Für die Wärmeaktivierung des Kantenstreifens mittels unter Überdruck auf den Kantenstreifen muss das aufgebrachte Heißgas von einer in der Regel entfernter liegenden Heißgasquelle zu der Stelle innerhalb der Schmalflächenbeschichtungsvorrichtung gebracht werden, an der das Heißgas auf den Kantenstreifen aufgegeben wird. Die Heißgasquelle ist aus Platzgründen üblicherweise ein Stück von der eigentlichen Verklebungsstelle entfernt angeordnet, so dass eine entsprechende schlauch- oder rohrförmige Führung für das Heißgas notwendig ist, die das Heißgas zu der Austrittsstelle, in der Regel einer direkt im Bereich der Verklebung angeordneten Heißgasdüse leitet. Hierbei muss das Heißgas möglichst genau auf der Temperatur gehalten werden, mit der es in der Heißgasquelle zur Verfügung gestellt wird, da die Regelung der Temperatur des Heißgases üblicherweise in der Heißgasquelle erfolgt. Kühlt das Heißgas auf dem Weg von der Heißgasquelle zur Heißgasdüse zu stark ab, ist die Verklebung des Kantenstreifens möglicherweise nicht mehr optimal oder sogar nicht mehr zuverlässig möglich. Auch ist die Erzeugung von Heißgas durchaus ein bedeutender Kostenfaktor, so dass es für die Wirtschaftlichkeit einer Schmalflächenbeschichtungsvorrichtung von Wichtigkeit ist, dass unnötige Energieverluste des Heißgases auf dem Weg von der Heißgasquelle zur Heißgasdüse vermieden werden. Daher hat eine gute Isolierung auch aus wirtschaftlichen Gründen notwendig. Zum anderen ist die schlauch- oder rohrförmige Führung für das Heißgas in der Regel in einem Bereich der Schmalflächenbeschichtungsvorrichtung angeordnet, in die auch Maschinenbediener oder sonstiges Personal im Laufe des Betriebs der Maschine eingreifen müssen und daher mit der schlauch- oder rohrförmige Führung für das Heißgas in Berührung kommen könnten. Da die Temperatur des Heißgases in einem Bereich von mehr als 450 °C beträgt, muss das Bedienpersonal gegenüber unbeabsichtigter Berührung mit der schlauch- oder rohrförmige Führung für das Heißgas geschützt werden.

Aus diesen Gründen wird die schlauch- oder rohrförmige Führung für das Heißgas üblicherweise mit einem Isoliermaterial umgeben, dass dafür sorgt, dass die Führung einerseits ausreichend isoliert ist und andererseits nicht versehentlich direkt berührt werden kann. Hierfür heutzutage verwendete Isoliermaterialien wie z.B. Stein- oder Glaswollematten weisen aufgrund der hohen Temperaturbelastung recht große Schichtdicken auf, die zur hinreichenden Isolierung gerade auch im Hinblick auf den Berührungsschutz notwendig sind. Die Isolierung muss dabei so wirksam sein, dass an deren freier Oberfläche die zulässigen Berührungstemperaturen nicht überschritten werden. Dadurch ist die schlauch- oder rohrförmige Führung für das Heißgas üblicherweise ein dickes Paket, das innerhalb der gerade im Bereich des Heißgasaustritts der Schmalflächenbeschichtungsvorrichtung engen Platzverhältnisse zu Problemen bei Konstruktion und im Betrieb führt.

Darüber hinaus muss das derart zur Verklebung benötigte Heißgas auch wieder aus dieser Verklebungszone derart abgeführt werden, dass die im Bereich der Verklebungszone angeordneten Funktionselemente möglichst nicht unzulässig erwärmt werden. Hierfür wird in der Regel ebenfalls eine Führung in Form eines Schlauches oder Rohres, von Wärmeleitblechen oder etwas Vergleichbarem benutzt, die aus den vorstehend genannten Gründen ebenfalls isoliert werden muss. Durch die Verwendung des Heißgases können darüber hinaus auch nicht direkt zur Zuführung oder Abführung des Heißgases gehörende Teile mit dem Heißgas beaufschlagt werden, die gegenüber dieser Temperaturexposition isoliert werden müssen.

Aufgabe der Erfindung ist es, eine verbesserte Isolierung für mit Heißgas in Berührung kommende Teile einer Schmalflächenbeschichtungsvorrichtung und insbesondere eine verbesserte schlauch- oder rohrförmige Führung für die Zuführung und/oder Abführung des Heißgases bereitzustellen, die die geschilderten Probleme nicht mehr verursacht und eine gute Wärmeisolierung bei geringem Bauvolumen ermöglicht.

Die Lösung der erfindungsgemäßen Aufgabe ergibt sich hinsichtlich der Isolierung aus den kennzeichnenden Merkmalen des Anspruches 1 und hinsichtlich der schlauch- oder rohrförmigen Führung aus den kennzeichnenden Merkmalen des Anspruches 13 in Zusammenwirken mit den Merkmalen des jeweiligen Oberbegriffes. Weitere vorteilhafte Ausgestaltungen der Erfindung ergeben sich aus den Unteransprüchen.

Die Erfindung geht aus von einer Isolierung für mit Heißgas in Berührung kommende Teile einer Schmalflächenbeschichtungsvorrichtung, insbesondere für schlauch- oder rohrförmige Führungen für Heißgas. Eine derartige gattungsgemäße Isolierung weist in erfindungsgemäßer Weise hochporöse oder mikroporöse Materialien, insbesondere Aerogel, insbesondere Aerogel auf Silikatbasis auf. Aerogele als ein besonders bekannter Vertreter hochporöse oder mikroporöse Materialien sind als besonders leichtgewichtige und gleichwohl extrem wärmeisolierende Stoffe bekannt und erlauben z.B. bei der Verwendung für schlauch- oder rohrförmige Führungen für Heißgas an Schmalflächenbeschichtungsvorrichtung gleichzeitig eine sehr geringe Isolierschichtdicke bei hoher Isolierwirkung, so dass die schlauch- oder rohrförmigen Führungen für Heißgas sehr geringe radiale Abmessungen bzw. Durchmesser aufweisen können. Hierdurch ist es möglich, derartige schlauch- oder rohrförmige Führungen für Heißgas bauvolumenmäßig sehr viel dünner zu halten als bei bisher verwendeten Isolierstoffen, so dass insbesondere schlauchförmige Führungen sehr viel einfacher biegsam und damit an den benötigten Verlauf der Führung anpassbar ausgestaltet werden können. Auch kann durch die guten Isoliereigenschaften der Aerogele eine Energie- und Kosteneinsparung bei der Bereitstellung des Heißgases erreicht werden, da das Heißgas sich auf dem Weg zur Heißgasdüse nicht oder kaum mehr abkühlt und daher die Menge bzw. Temperatur des erzeugten Heißgases verringert werden kann. Hochporöse oder mikroporöse Materialien im Sinne der vorliegenden Erfindung können nicht nur Aerogele sein, sondern auch auf Basis anderer Ausgangsstoffe herstellbare Materialien mit vergleichbaren Eigenschaften. Wenn im Weiteren vereinfachend von Aerogelen gesprochen wird, so sind damit immer alle entsprechenden hochporösen oder mikroporösen Materialien mit umfasst und in die Erfindung einbezogen.

Ganz allgemein kann durch die Verwendung der erfindungsgemäß vorgeschlagenen hochporösen oder mikroporösen Materialien, insbesondere Aerogele bei dem begrenzten zur Verfügung stehenden Bauraum einer Schmalflächenbeschichtungsvorrichtung überall dort eine thermische Isolierung vorgesehen werden, wo durch die verwendeten Heißgase thermische Belastungen auf angrenzende Bauteile nicht zu vermeiden sind. So ist etwa im Bereich der Gasaustrittsdüse durch die Strömungsverhältnisse nicht zu vermeiden, dass Anteile des Heißgases in die Umgebung um die Gasaustrittsdüse austreten und dort vorhandene Bauteile thermisch belasten. Diese Bauteile können in erfindungsgemäßer Weise durch die Aerogele aufweisende Isolierung ganz oder teilweise gegenüber dieser Wärmeexposition geschützt und damit in ihrer dauerhaften Funktion verbessert bzw. erhalten werden, ohne dass der Einbauraum und der Funktionsraum für die Beschichtung mittels Kantenmaterial davon unzumutbar eingeschränkt wird.

Von besonderen Vorteil ist es, wenn die Isolierung neben dem Aerogel Stütz- und Verstärkungsstrukturen aufweist, insbesondere Verstärkungsfasern oder dgl. Hierdurch kann die Isolierung gegenüber mechanischen Belastungen stabilisiert werden, da Aerogele selbst mechanisch nur beschränkte Festigkeiten aufweisen. Durch die Stütz- und Verstärkungsstrukturen wird das entstehende Verbundmaterial mechanisch deutlich stabiler ohne allzu große Verluste an Isolierwirkung.

Für die Verarbeitung der Isolierung ist es in einer ersten Ausgestaltung denkbar, dass die Aerogel aufweisende Isolierung in Form von mattenförmigen oder schlauchförmigen Halbzeugen an mit dem Heißgas beaufschlagten Teilen der Schmalflächenbeschichtungsvorrichtung angeordnet wird. Derartige mattenförmige oder schlauchförmige Halbzeuge haben den Vorteil, dass sie vorkonfektioniert bezogen und einfach verarbeitet werden können. Auch ist durch Verwendung von mit Stütz- und Verstärkungsstrukturen versehenen mattenförmigen oder schlauchförmigen Halbzeugen die mechanische Empfindlichkeit rein aus Aerogel bestehender Materialien gemildert und die Verarbeitung sowie auch eine Nachrüstung am Einsatzort denkbar.

In weiterer Ausgestaltung kann die Isolierung eine Schichtdicke von 3 bis 20 mm, vorzugsweise von 5-15 mm aufweisen. Die Schichtdicke hängt dabei vornehmlich von den Temperaturen der zu isolierenden Bauteile und der gewünschten Oberflächentemperatur ab und kann selbstverständlich in weiten Bereichen variiert werden, auch außerhalb der vorstehend besonders bevorzugten Schichtdicken. Auch ist es denkbar, dass die Isolierung ein- oder mehrlagig ausgebildet werden kann, z.B. um eine bessere Verarbeitbarkeit der Aerogelmatten oder -schläuche zu erreichen.

In weiterer Ausgestaltung ist es denkbar, dass die Aerogel aufweisende Isolierung durch eine Schutzhülle oder eine Schutzschicht gegen mechanische Belastungen geschützt ist. Hierdurch kann, ggf. zusätzlich zum Vorsehen von Stütz- und Verstärkungsstrukturen an der Isolierung selbst, eine weitere Verbesserung der mechanischen Belastbarkeit und der Dauerhaltbarkeit der Isolierung erzielt werden. So ist es abhängig von dem Grad der Isolierwirkung der Isolierung sowie den zu Temperaturen der zu isolierenden Heißgase denkbar, z.B. einen aus Kunststoffen, Geweben oder dgl. bestehenden Schutzschlauch oder Schutzhülle vorzusehen, da die an der Oberfläche der Isolierung austretenden Temperaturen keine unzulässige Belastung derartiger Schutzschläuche oder Schutzhüllen hervorrufen. In anderer Weiterbildung kann aber die Schutzhülle oder Schutzschicht ein wärmeresistentes Material, vorzugsweise ein metallisches Material aufweisen, das noch einmal thermisch und mechanisch stärker belastbarer ist. So können z.B. für flexible Führungen und damit auch flexible Isolierungen Wellschläuche oder gewickelte oder gewirkte mechanisch belastbare Materialien wie etwa Metalle verwendet werden, z.B. in Form von fertig beziehbaren Wellschläuchen oder Panzerschläuchen. Hierdurch ist eine im alltäglichen Dauerbetrieb besonders stabile schlauch- oder rohrförmige Führung für Heißgas herstellbar. Dies gilt selbstverständlich auch für alle anderen Einsatzfälle der erfindungsgemäßen Isolierung z.B. bei der ganz oder teilweise Umhüllung von mit dem Heißgas beaufschlagten Teilen der Schmalflächenbeschichtungsvorrichtung, die ebenfalls mit derartigen Schutzhüllen umgeben werden können.

In einer anderen Ausgestaltung ist es denkbar, dass die Aerogel aufweisende Isolierung aus pulverartigen oder granulatartigen Ausgangsmaterialien gebildet ist, die in eine Schutzhülle um die schlauch- oder rohrförmige Führungen für Heißgas herum einfüllbar sind. Derartige pulverartigen oder granulatartigen Ausgangsmaterialien aufweisend Aerogele können besonders einfach verarbeitet werden, erfordern jedoch eine die Ausgangsmaterialien aufnehmende Umhüllung, die dauerhaft aufrechterhalten werden muss. Hierdurch lässt sich eine besonders dichte Umhüllung der Heißgas führenden Schläuche oder Rohre einfach herstellen, indem die pulverartigen oder granulatartigen Ausgangsmaterialien in die Umhüllung eingebracht und dort ggf. verdichtet werden. Damit ist es ausgeschlossen, dass Verarbeitungsfehler, die etwa bei mattenartigen Halbzeugen auftreten können, die Funktionsfähigkeit der Isolierung gefährden. In einer sonders bevorzugten Ausgestaltung ist es denkbar, dass die Schutzhülle eine, vorzugsweise wiederverschließbare Öffnung zum Einfüllen der pulverartigen oder granulatartigen Ausgangsmaterialien aufweist. Damit kann auch nachträglich und bei Bedarf kontrolliert werden, ob das Aerogel aufweisende Isoliermaterial noch bestimmungsgemäß angeordnet ist. Auch ist eine spätere Nachfüllung z.B. bei Feststellung einer vorhandenen Kompaktierung des Aerogel aufweisenden Isoliermaterials aufgrund des Betriebs der Schmalflächenbeschichtungsvorrichtung denkbar.

In einer weiteren Ausgestaltung ist es denkbar, dass die Aerogel aufweisende Isolierung, vorzugsweise in einem Sol-/Gel-Prozess, auf dem mit dem Heißgas beaufschlagten Teil der Schmalflächenbeschichtungsvorrichtung abscheidbar ist. Hierbei kann quasi bei der Entstehung der Aerogel aufweisenden Isolierung diese direkt an dem zu schützenden Bauteil festgelegt und damit dauerhaft sicher angeordnet werden.

Die Erfindung betrifft weiterhin eine schlauch- oder rohrförmige Führung für Heißgas an einer Schmalflächenbeschichtungsvorrichtung, aufweisend ein schlauch- oder rohrförmiges Führungselement für Heißgas, insbesondere Heißluft sowie ein das Führungselement zumindest bereichsweise umgebendes Isoliermaterial, bei der die erfindungsgemäße Führung für Heißgas Isoliermaterial mit hochporösen oder mikroporösen Materialien, insbesondere Aerogel, vorzugsweise Aerogel auf Silikatbasis aufweist. Die schon vorstehend ausgeführten Eigenschaften zu dem Isoliermaterial unter Verwendung von hochporösen oder mikroporösen Materialien, insbesondere Aerogelen lassen sich voll umfänglich auch auf die erfindungsgemäße schlauch- oder rohrförmige Führung für Heißgas übertragen und werden hiermit ausdrücklich auch für die schlauch- oder rohrförmige Führung geltend gemacht.

In konkreterer Ausgestaltung ist es dabei auch denkbar, dass die schlauch- oder rohrförmige Führung für Heißgas eine doppelwandige Ausbildung aufweisen kann, wobei in einer inneren schlauch- oder rohrförmigen Führung das Heißgas zum Gasaustritt transportiert und in der äußeren schlauch- oder rohrförmigen Führung das schon verwendete, abgekühlte Heißgas zur Heißgasquelle für eine Wärmerückgewinnung zurück transportiert wird. Hierdurch wird mit nur einer einzigen schlauch- oder rohrförmigen Führung sowohl die Zuführung des aus der Heißgasquelle kommenden Heißgases als auch die Rückführung der zur verbesserten Energiebilanz zurück gewonnenen und ggf. zurück zur Heißgasquelle geführten Abluft realisiert, wodurch ein weiterer Platzgewinn gegenüber herkömmlichen getrennten Zu- und Abführungen erzielbar ist. Das etwa durch eine Auffangvorrichtung zumindest großteils nach Durchtreten der Heißgasdüse wieder aufgefangene Heißgas kann in einem Kreisprozess wieder zur Heißgasquelle zurück geführt und dort neu erhitzt werden. Auch ist es denkbar, dass dieses benutzte Heißgas zur Wärmeübertragung auf das frisch zugeführte Heißgas genutzt wird und dieses in einem Wärmetauscher ihre Wärmemenge auf das zu erhitzende Heißgas überträgt. Auch kann eines solche Wärmeübertragung innerhalb der doppelwandigen Führung selbst erfolgen, wenn die innere Führung für das Heißgas und die äußere Führung für das benutzte Heißgas in wärmeleitendem Kontakt miteinander stehen.

Hierbei ist es in weiterer Ausgestaltung auch denkbar, dass die innere und/oder die äußere schlauch- oder rohrförmige Führung von einer Schicht von Isoliermaterial enthaltend Aerogel umgeben ist. Je nach Art der gewünschten Wärmeübertragung von zugeführtem Heißgas und rückgeführtem Heißgas kann dann eine Schicht von Isoliermaterial zwischen der inneren Führung und der äußeren Führung angeordnet werden. In der Regel wird aber zumindest außerhalb der äußeren Führung eines entsprechende Isolierschicht vorgesehen sein.

In anderer Ausgestaltung ist es auch denkbar, dass mindestens je eine schlauch- oder rohrförmige Führung für die Zuführung von frischem Heißgas in und für die Abführung des zur Verklebung benutzten Heißgases aus dem Arbeitsraum der Schmalflächenbeschichtungsvorrichtung vorgesehen wird. Hierdurch können auch unterschiedliche Führungswege erreicht werden, so dass eine größere Flexibilität bei der Verlegung der schlauch- oder rohrförmigen Führung möglich ist. Auch sind derartige beispielsweise schlauchförmige Führungen einfacher biegbar, da ihr Durchmesser geringer als bei einer doppelwandigen Ausführung sein kann.

## Patentansprüche

1. Isolierung für mit Heißgas in Berührung kommende Teile einer Schmalflächenbeschichtungsvorrichtung, insbesondere für schlauch- oder rohrförmige Führungen für Heißgas,
**dadurch gekennzeichnet, dass**
die Isolierung hochporöse oder mikroporöse Materialien, insbesondere Aerogel, vorzugsweise Aerogel auf Silikatbasis aufweist.

2. Isolierung gemäß Anspruch 1, **dadurch gekennzeichnet, dass** die Isolierung neben dem Aerogel Stütz- und Verstärkungsstrukturen aufweist, insbesondere Verstärkungsfasern oder dgl.

3. Isolierung gemäß einem der Ansprüche 1 oder 2, **dadurch gekennzeichnet, dass** die Aerogel aufweisende Isolierung an mit dem Heißgas beaufschlagten Teilen der Schmalflächenbeschichtungsvorrichtung zumindest bereichsweise derart angeordnet ist, dass das mit dem Heißgas beaufschlagte Teil der Schmalflächenbeschichtungsvorrichtung sich durch den Kontakt mit dem Heißgas nicht unzulässig erwärmt.

4. Isolierung gemäß einem der vorstehenden Ansprüche, **dadurch gekennzeichnet, dass** die Aerogel aufweisende Isolierung in Form von mattenförmigen oder schlauchförmigen Halbzeugen an mit dem Heißgas beaufschlagten Teilen der Schmalflächenbeschichtungsvorrichtung angeordnet ist.

5. Isolierung gemäß einem der vorstehenden Ansprüche, **dadurch gekennzeichnet, dass** die Isolierung eine Schichtdicke von 3 bis 20 mm, vorzugsweise von 5-15 mm aufweist.

6. Isolierung gemäß einem der vorstehenden Ansprüche, **dadurch gekennzeichnet, dass** die Isolierung ein- oder mehrlagig ausgebildet ist.

7. Isolierung gemäß einem der vorstehenden Ansprüche, **dadurch gekennzeichnet, dass** die Aerogel aufweisende Isolierung durch eine Schutzhülle oder eine Schutzschicht gegen mechanische Belastungen geschützt ist.

8. Isolierung gemäß Anspruch 7, **dadurch gekennzeichnet, dass** die Schutzhülle oder Schutzschicht ein wärmeresistentes Material, vorzugsweise ein metallisches Material und/oder ein Kunststoffmaterial und/oder ein Gewebe aufweist.

9. Isolierung gemäß einem der Ansprüche 7 oder 8, **dadurch gekennzeichnet, dass** die Schutzhülle oder Schutzschicht für schlauchförmige Führungen für Heißgas ein flexibles, insbesondere biegsames Material aufweist.

10. Isolierung gemäß einem der Ansprüche 1 bis 3, **dadurch gekennzeichnet, dass** die Aerogel aufweisende Isolierung aus pulverartigen oder granulatartigen Ausgangsmaterialien gebildet ist, die in eine Schutzhülle um die schlauch- oder rohrförmige Führungen für Heißgas herum einfüllbar sind.

11. Isolierung gemäß Anspruch 10, **dadurch gekennzeichnet, dass** die Schutzhülle eine, vorzugsweise wiederverschließbare Öffnung zum Einfüllen der pulverartigen oder granulatartigen Ausgangsmaterialien aufweist.

12. Isolierung gemäß einem der Ansprüche 1 bis 3, **dadurch gekennzeichnet, dass** die Aerogel aufweisende Isolierung, vorzugsweise in einem Sol-/Gel-Prozess, auf dem mit dem Heißgas beaufschlagten Teil der Schmalflächenbeschichtungsvorrichtung abscheidbar ist.

13. Schlauch- oder rohrförmige Führung für Heißgas an einer Schmalflächenbeschichtungsvorrichtung, aufweisend ein schlauch- oder rohrförmiges Führungselement für ein Heißgas, insbesondere Heißluft, sowie ein das Führungselement zumindest bereichsweise umgebendes Isoliermaterial,
**dadurch gekennzeichnet, dass**
das Isoliermaterial hochporöse oder mikroporöse Materialien, insbesondere Aerogel, vorzugsweise Aerogel auf Silikatbasis aufweist.

14. Schlauch- oder rohrförmige Führung gemäß Anspruch 13, **dadurch gekennzeichnet, dass** die schlauch- oder rohrförmige Führung für Heißgas eine doppelwandige Ausbildung aufweist, wobei in einer inneren schlauch- oder rohrförmigen Führung das Heißgas zum Gasaustritt transportiert und in der äußeren schlauch- oder rohrförmigen Führung das schon verwendete, abgekühlte Heißgas zur Heißgasquelle und/oder einem Wärmetauscher für eine Wärmerückgewinnung zurück transportiert wird.

15. Schlauch- oder rohrförmige Führung gemäß Anspruch 12, **dadurch gekennzeichnet, dass** die innere und/oder die äußere schlauch- oder rohrförmige Führung von einer Schicht von Isoliermaterial enthaltend Aerogel umgeben ist.

16. Schlauch- oder rohrförmige Führung gemäß Anspruch 13, **dadurch gekennzeichnet, dass** die mindestens je eine schlauch- oder rohrförmige Führung für die Zuführung von frischem Heißgas in und für die Abführung des zur Verklebung benutzten Heißgases aus dem Arbeitsraum der Schmalflächenbeschichtungsvorrichtung vorgesehen ist.
